# EUROPÄISCHE PATENTSCHRIFT

(11) **EP 3 096 626 B1**
(45) Veröffentlichungstag und Bekanntmachung des Hinweises auf die Patenterteilung: **12.09.2018**
(21) Anmeldenummer: 15702963.8
(22) Anmeldetag: 20.01.2015
(51) Int. Cl.: A23C 3/033, A23C 7/04, B01D 19/00

(54) **VERFAHREN ZUR REDUZIERUNG DES WACHSTUMS THERMOPHILER KEIME IN WÄRMEAUSTAUSCHERN MOLKEREITECHNISCHER PROZESSANLAGEN**
METHOD FOR REDUCING THE GROWTH OF THERMOPHILIC BACTERIA IN HEAT EXCHANGERS OF DAIRY PROCESSING PLANTS
PROCÉDÉ PERMETTANT DE RÉDUIRE LA CROISSANCE DES GERMES THERMOPHILES DANS LES ÉCHANGEURS DE CHALEUR D'INSTALLATIONS TECHNIQUES LAITIÈRES

(30) Priorität: 25.01.2014 DE 102014001037
(43) Veröffentlichungstag der Anmeldung: 30.11.2016
(73) Patentinhaber: GEA TDS GmbH, 31157 Sarstedt (DE)
(72) Erfinder: ROLLE, Ulrich, 48351 Everswinkel (DE); ASSING, Hubert, 48683 Ahaus (DE); ZIMMERMANN, Dietrich, 96103 Hallstadt (DE); TACKE, Ludger, 46342 Velen (DE); DRECKMANN, Reinhold, 48249 Dülmen (DE)
(74) Vertreter: Hauck Patentanwaltspartnerschaft mbB
(86) Internationale Anmeldenummer: PCT/EP2015/000097
(87) Internationale Veröffentlichungsnummer: WO 2015/110258

(56) Entgegenhaltungen:
- DE-A1-102005 015 713
- DE-A1-102007 037 941
- DE-B- 1 017 011
- DE-B- 1 185 464
- FR-A- 887 000

## Beschreibung

### TECHNISCHES GEBIET

Die Erfindung betrifft ein Verfahren zur Reduzierung des Wachstums thermophiler Keime in Wärmeaustauschern molkereitechnischer Prozessanlagen, wobei das Temperaturoptimum zum optimalen Wachstum der thermophilen Keime in einem Temperaturbereich von 63 °C bis 68 °C liegt. In einem rekuperativen Wärmeaustauscher findet eine indirekte Wärmeübertragung zwischen zwei Stoffströmen statt, die durch eine wärmedurchlässige Wand getrennt sind. Bei der Magermilch kann es sich beispielsweise um solche handeln, die im Betriebsraum einer molkereitechnischen Prozessanlage nach einem Separator zur Trennung von Rohmilch in Magermilch und Rahm anfällt und anschließend mit oder ohne Wärmebehandlung einem weiteren Verarbeitungsprozess zugeführt oder die nach Bevorratung in einem Lagertank und Abkühlung auf eine Lagerungstemperatur beispielsweise einem Eindampfer zugeführt wird. Die Reduzierung des Wachstums thermophiler Keime und damit auch die Reduzierung thermophiler Keime an sich in der ursprünglichen Magermilch haben signifikanten Einfluss auf den diesbezüglichen Keimgehalt in nachgelagerten Magermilchprodukten.

### STAND DER TECHNIK

In Wärmeaustauschern molkereitechnischer Prozessanlagen können sich, unabhängig von der Ausführung als Platten- oder Rohr-Wärmeaustauscher, der Rohmilch oder deren Fraktionen (Magermilch, Rahm) entstammende thermophile Mikroorganismen bzw. Bakterien, die keiner Hocherhitzung unterzogen und damit nicht inaktiviert wurden, oder die Stoffwechselprodukte dieser Bakterien ansetzen und einen sogenannten Biofilm bilden. Dieser Biofilm entsteht vorzugsweise in einem Wärmeaustauscher, insbesondere in einem regenerativ betriebenen, in dem die Milch in der Regel im Temperaturbereich von ca. 50 °C bis 70 °C thermisch behandelt wird. Bei Temperaturen über 50 °C können zwar keine pathogenen Bakterien mehr wachsen, dafür aber andere Keime, die vorstehend erwähnten thermophilen Mikroorganismen bzw. Bakterien. Im Folgenden steht für thermophile Mikroorganismen oder Bakterien überwiegend die Bezeichnung thermophile Keime. Thermophile Keime nutzen einen Temperaturbereich von ca. 40 °C bis 80 °C, wobei der Temperaturbereich für das optimale Wachstum der thermophilen Keime im Bereich von ca. 63 °C bis 68 °C (sog. Temperaturoptimum oder günstigste Wachstumstemperatur (Optimum)) liegt (siehe beispielsweise "mikrobiol.de/Teil A (103-104) HO"). Neben diesem Temperaturoptimum müssen für das Wachstum ausreichend Nährstoffe und Sauerstoff gegeben sein.

Während der Betriebsdauer des Wärmeaustauschers, seiner sogenannten Standzeit zwischen zwei benachbarten Reinigungszyklen (CIP-Reinigung), kann, ausgehend von einer Keimzahl von über 5x10² KbE/ml im Vorlauf des Wärmeaustauschers, im Wärmeaustauscher selbst ein Anstieg auf deutlich über 4x10⁵ KbE/ml nach 4 bis 6 Stunden erfolgen (Anmerkung: KbE steht für koloniebildende Einheiten). Dieser Anstieg kann auch aus Anlagerungen in strömungsschwachen Bereichen des Wärmeaustauschers resultieren. Es ist davon auszugehen, dass in den meisten Wärmeaustauschern der in Rede stehenden Art dieser Sachverhalt gegeben ist. Der Gehalt an thermophilen Keimen tritt innerhalb Deutschlands in der Rohmilch relativ gleichmäßig auf. Die Untersuchungen zweier Molkereien ergaben jeweils Keimzahlen von ca. 200 bis 600 KbE/ml.

Wird die Magermilch einer Konzentrierung in Eindampfanlagen zugeführt, so wird der Anteil an organischen Säuren, die durch den Stoffwechsel der thermophilen Keime gebildet werden und den Biofilm bilden, zwangsläufig konzentriert. Ist der pH-Wert im Konzentrat auf 6,20 reduziert, ist das Ende der Standzeit erreicht und die Eindampfanlagen müssen gereinigt werden. Weiterverarbeitende Betriebe, wie Käsereien oder Milch-Trocknungsanlagen, bekommen andernfalls technologische Probleme, da das Konzentrat nicht mehr marktfähig ist. Teilweise werden in Spezifikationen der Magermilchkonzentrate Keimgehalte unter 2x10⁵ KbE/ml gefordert. Dies ist unter den gegenwärtig gegebenen Produktionsbedingungen nicht erreichbar.

In der DE 10 2005 015 713 A1 ist ein Verfahren zur Entgasung und Aufrechterhaltung eines kontinuierlichen Volumenstromes einer zu behandelnden Milch in einer Ultra-Hoch-Temperatur (UHT) Anlage mit indirekter Erhitzung (rekuperative Erhitzung in Wärmeaustauschern) und integriertem Separator für die Milchfettstandardisierung und mit einer Zwischenspeicherung einer eine Anordnung mit Separator verlassenden (standardisierten) Milch beschrieben, das unter anderem dadurch gekennzeichnet ist, dass der Volumenstrom in einer der Anordnung mit Separator nachgeordneten Entgasungs- und Speichervorrichtung fortdauernd eine Behandlung nach den folgenden Schritten a) bis d) erfährt, wobei
a) mit dem Volumenstrom eine punktsymmetrisch, radial gesehen, von innen nach außen zunächst waagerecht und anschließend abfallend ausbreitende Filmströmung erzeugt wird,
b) die Filmströmung in Höhe einer Oberfläche eines Speichervolumens in der Entgasungs- und Speichervorrichtung generiert und dort auf diese Oberfläche aufgeschichtet wird,
c) im Speichervolumen eine entgegen einem Gasblasenauftrieb orientierte, über den Querschnitt des Speichervolumens gleichverteilte Kolbenströmung erzeugt wird und
d) der Volumenstrom dem Speichervolumen am unteren Ende zentral entnommen wird.

Das bekannte Verfahren entgast in ihrem Fettgehalt standardisierte Milch, die einer UHT-Anlage zugeführt wird. Unter standardisierter Milch versteht man eine Milch mit einem vorgegebenen Fettgehalt. Es hat sich für die Standzeit der Wärmeaustauscher dieser UHT-Anlagen mit indirekter Erhitzung als vorteilhaft erwiesen, wenn der Luftgehalt unterhalb von 8 mg Luftsauerstoff/dm³ Milch liegt. Oberhalb eines diesbezüglichen Grenzwertes besteht die erhöhte Gefahr des Anbrennens, insbesondere in den Wärmeaustauschern der Erhitzerzone und des Heißhalters, wodurch die Standzeit dieser Wärmeaustauscher signifikant verkürzt wird. Die Vermeidung des Anbrennens, insbesondere in den Wärmeaustauschern der Erhitzerzone und des Heißhalters von UHT-Anlagen, durch Reduzierung des Luftgehaltes unterhalb von 8 mg Luftsauerstoff/dm³ Milch ist auch das erklärte Ziel des in der DE 10 2007 037 941 A1 beschriebenen Verfahrens.

Dieses zeichnet sich gemäß einer bevorzugten Ausgestaltung dadurch aus, dass ein flüssiges Produkt, insbesondere ein flüssiges Nahrungsmittel wie Käsereimilch, Rahm oder UHT-Milch, und zwar in Form eines Gesamtstromes eines gasbeladenen Produkts einem Eintritt eines Verteilerrohres zugeführt wird. Dort wird das gasbeladene Produkt in wenigstens einen erzwungenen Teilstrom umgewandelt bzw. verzweigt, der Teilstrom bzw. die Teilströme werden jeweils entgegen der Schwerkraft in einen gasabführenden Sammelraum transportiert und jeweils nach Strömungsrichtungsumkehr in sich schwerkraftseitig ausbreitende Filmströmungen mit zum Sammelraum freier Oberfläche transformiert. Die durch die Filmströmungen jeweils gebildeten Teilströme eines zu entgasenden Produkts werden durch Abscheidung der Gasblasen im Schwerefeld der Erde entgast, anschließend gesammelt und als ein Gesamtstrom des entgasten Produkts einem Austritt aus dem Sammelraum zugeführt.

Die WO 2006/011 801 A1 beschreibt ein Verfahren zur Konditionierung insbesondere des Sauerstoffgehaltes in pasteurisierter Milch oder in pasteurisierten Milchprodukten, wobei eine verbesserte mikrobiologische Qualität, eine verbesserte physikalische und/oder chemische Stabilität des jeweiligen Produkts angestrebt wird. Dieser Stand der Technik geht nicht über jenen Stand der Technik hinaus, der vorstehend gewürdigt wurde. Die Reduzierung thermophiler Keime in Magermilch mit dem Ziel, die Wachstumsgeschwindigkeit des sich durch diese Keime bildenden Biofilms in rekuperativen Wärmeaustauschern, insbesondere in regenerativ betriebenen, zu hemmen, ist nicht offenbart oder nahegelegt. Weitere Verfahren zur Wärmebehandlung von Milch sind in FR 887000, DE 11 85 464 und DE 10 17 011 beschrieben.

Dem Gehalt von Luft bzw. Luftsauerstoff und anderen Gasbeimengungen in Rohmilch, Käsereimilch (Kesselmilch), Rahm oder UHT-Milch und der notwendigen Reduzierung dieser Gasbeimengungen wurde und wird besondere Beachtung geschenkt, weil die Reduzierung der Qualitätsoptimierung dient und die vorstehend geschilderten negativen Auswirkungen offenkundig sind. Die Anzahl thermophiler Keime in den Molkereiprodukten spielte bislang eine untergeordnete Rolle und wurde daher technisch nicht betrachtet. Zukünftig wird diese Keimbelastung sicher zwischen den Verwendern quantifiziert und sie wird zu einem Teil der Qualitätsbeschreibung der gehandelten Produkte. In diesem Kontext kommt zwangsläufig auch dem Gehalt an thermophilen Keimen in der Magermilch besondere Bedeutung zu. Diesbezüglich wurde bislang der Zusammenhang zwischen dem aus der Rohmilch resultierenden Gehalt an thermophilen Keimen in der Magermilch und den negativen Auswirkungen dieser Keime auf die Bildung eines Biofilms in vornehmlich regenerativ betriebenen Wärmeaustauschern der Vorwärmzone von Prozessanlagen (Reduzierung der Standzeit) nicht erkannt oder zumindest nicht beachtet und deshalb gibt es hierfür bis heute auch keine wirksamen Lösungen. Es ist Aufgabe der vorliegenden Erfindung, ein Verfahren der gattungsgemäßen Art zu schaffen, womit die Standzeit der mit Magermilch beaufschlagter rekuperativer Wärmaustauscher, insbesondere regenerativ betriebener, erhöht wird.

### ZUSAMMENFASSUNG DER ERFINDUNG

Diese Aufgabe wird durch ein Verfahren mit den Merkmalen des Anspruchs 1 gelöst. Vorteilhafte Ausgestaltungen des Verfahrens sind Gegenstand der Unteransprüche.

Der grundlegende Lösungsgedanke der Erfindung geht davon aus, dass bislang der Zusammenhang zwischen dem aus der Rohmilch resultierenden Gehalt an thermophilen Keimen in der Magermilch und den negativen Auswirkungen dieser Keime auf die Bildung eines Biofilms (Reduzierung der Standzeit) in vornehmlich regenerativ betriebenen rekuperativen Wärmeaustauschern der Vorwärmzone von molkereitechnischen Prozessanlagen (Temperaturbereich von ca. 50 °C bis 70 °C) nicht erkannt oder zumindest nicht beachtet wurde. Das Wachstum und damit der Anstieg des Gehalts an thermophilen Keimen sind nur durch den verfügbaren Sauerstoff und die vorhandenen Nährstoffe im Substrat im für das Keimwachstum maßgeblichen Temperaturoptimum möglich. Da das Vorhandensein der Nährstoffe und die Temperaturbedingungen im molkereitechnischen Prozess einen unabwendbaren Sachverhalt darstellen, verbleibt als Einflussgröße für die Veränderung der Wachstumsgeschwindigkeit und damit für die Begrenzung der Vermehrung der thermophilen Keime nur die Reduzierung des Sauerstoffs.

Hier setzt nun die erfindungsgemäße Lösung an, indem sie den Luftsauerstoff über eine hinreichende Entgasung der Magermilch reduziert. Die Lösung besteht darin, dass die in dem Behandlungsprozess bereitgestellte nicht entgaste Magermilch, die keiner Hocherhitzung zur Inaktivierung thermophiler Keime unterzogen wurde, in einem Temperaturbereich unterhalb von 63 °C einer Entgasung unterzogen und dadurch zu einer entgasten Magermilch wird. Die entgaste Magermilch erfährt in einem weiteren Behandlungsprozess eine thermische Behandlung in einem rekuperativen Wärmeaustauscher, wobei die thermische Behandlung oberhalb von 63 °C erfolgt.

Da die thermophilen Keime eine sehr kurze Generationszeit mit einem hohen Stoffumsatz haben, sind sie mit Blick auf die Wachstumsgeschwindigkeit auch gleichermaßen empfindlich, sobald kein Sauerstoff mehr vorhanden ist. Durch die erfindungsgemäße Entgasung gelangt eine hinreichend entgaste Magermilch in den Wärmeaustauscher und somit fehlt den thermophilen Mikroorganismen bzw. Keimen der Sauerstoff als notwendiger Nährstoff für ihre Vermehrung. Dadurch wird die Wachstumsgeschwindigkeit der thermophilen Mikroorganismen verlangsamt. Da allerdings schon Sauerstoff in den vorhandenen Zellen der Mikroorganismen eingeschlossen ist oder sein kann und eine vollständige Entgasung im Prozess nicht gewährleistet werden kann, ist mit ein bis zwei Generationen Wachstum zu rechnen. Die mit der Vermehrung der Mikroorganismen einhergehende Bildung von organischen Säuren wirkt sich für die Magermilch nur unwesentlich aus. Somit kann die Prozessanlage länger unter Einhaltung der erforderlichen Qualitätsparameter betrieben und ihre Standzeit verlängert werden. Die thermophile Keimzahl wird entsprechend niedrig gehalten und die Bildung des Biofilms ist gehemmt.

Eine Ausgestaltung des Verfahrens sieht vor, dass die thermische Behandlung der entgasten Magermilch in einem Temperaturbereich von 63 °C bis 68 °C (63 °C < Top < 68 °C), dem Temperaturoptimum zum optimalen Wachstum thermophiler Keime, liegt.

Das Verfahren sieht vor, dass die Entgasung mit einer Entgasungstemperatur unterhalb des Temperaturoptimums durchgeführt wird. Diese Maßnahme stellt sicher, dass zum Einen die Entgasung durch Anheben der Entgasungstemperatur befördert wird und zum Anderen aber das Wachstum der thermophilen Keime während der Entgasung noch gehemmt bleibt. Dabei bleibt die Entgasungstemperatur generell unter 63 °C, und zwar ist bevorzugt ein Bereich zwischen 53 °C und 58 °C vorgesehen und hier wiederum eine Entgasungstemperatur von bevorzugt 55 °C.

Das Verfahren sieht weiterhin vor, die entgaste Magermilch in ihrem Zustand nach ihrer Entgasung zeitlich unmittelbar einem der Entgasung folgenden Behandlungsprozess zuzuführen. Diese Vorgehensweise kann dann von Vorteil sein, wenn im Prozessverlauf eine optimale Entgasungstemperatur der Magermilch vorliegt und zur Entgasung genutzt wird und dieser Prozessverlauf eine Abkühlung der Magermilch auf eine Lagerungstemperatur und eine anschließende Stapelung bei dieser Lagerungstemperatur nicht vorsieht.

In allen anderen Fällen ist es zweckmäßig, wie dies das Verfahren alternativ vorschlägt, eine zunächst im Prozessverlauf gegebene oder ohne besonderen Aufwand realisierbare optimale Entgasungstemperatur für die Entgasung zu nutzen und anschließend die entgaste Magermilch nach ihrer Entgasung auf eine geeignete Lagerungstemperatur abzukühlen und bei dieser zu lagern. Dabei hat es sich als zweckmäßig erwiesen, wenn die Lagerungstemperatur zwischen 8 °C und 15 °C liegt.

Das Verfahren sieht weiterhin vor, dass die Entgasung über eine an die jeweiligen Erfordernisse des Entgasungsprozesses anpass- und frei einstellbare Zeitdauer durchgeführt wird. Diese Maßnahme bedeutet, dass in der durch die Zeitdauer bestimmten sogenannten mittleren Verweilzeit der zu entgasenden Magermilch im Entgasungsprozess und damit konkret in der hierfür vorgesehenen Entgasungseinrichtung weitreichend allen abscheidbaren Gasbestandteilen der Magermilch die Gelegenheit zu ihrer Abscheidung gegeben ist.

Das erfindungsgemäße Verfahren ist in zwei bevorzugten, an sich bekannten Vorrichtungen vorteilhaft durchführbar, die in ihrem Aufbau relativ einfach sind und bei denen die mittlere Verweilzeit der zu entgasenden Magermilch in Grenzen frei einstellbar ist.

Die erste Vorrichtung ist als Behälter ausgebildet, der an seinem unteren Ende einen zentralen Ablaufstutzen für die entgaste Magermilch aufweist, welcher von einem von unten in den Behälter eingreifenden Zulaufrohr für die zu entgasende Magermilch konzentrisch durchdrungen ist. Das Zulaufrohr stellt eine Verbindung mit einem Umfangsringspalt her, der zwischen einem Verteilerschirm und einer zu letzterem oberhalb beabstandeten und konzentrisch angeordneten, in den flächigen Abmessungen kleineren Prallplatte gebildet ist. Der Verteilerschirm erstreckt sich quer zur Längsachse des Behälters waagerecht und anschließend auf radialem Weg schwerkraftseitig abfallend und endet außenseits auf gleicher Höhe mit einem ein Speichervolumen im Behälter abbildenden Niveau der zu entgasenden Magermilch.

Die zweite Vorrichtung weist einen in Richtung der Schwerkraft orientierten Sammelraum auf, der umfangsseitig von einem Behältermantel, bodenseitig von einem Behälterboden und im Kopfraum mit einem Behälterdeckel begrenzt ist. Es ist wenigstens ein Steigrohr vorgesehen, das den Behälterboden durchdringt, sich in den Behältermantel hinein erstreckt und offen endet. Es sind weiterhin ein im Bereich des Behälterbodens aus dem Sammelraum ausmündendes Sammelrohr, das mit einem Austritt für einen Gesamtstrom der entgasten Magermilch verbunden ist, ein sich unterhalb des Behälterbodens in das wenigstens eine Steigrohr verzweigendes Verteilerrohr und eine Gasleitung vorgesehen, in die der Sammelraum im Bereich des Behälterdeckels ausmündet. Das Steigrohr ist an seinem offenen Ende als Überlaufkante ausgebildet, wobei ein dem Steigrohr zugeführter Teilstrom der zu entgasenden Magermilch auf der Außenfläche des Steigrohres eine sich schwerkraftseitig ausbreitende Filmströmung mit zum Sammelraum freier Oberfläche generiert. Das Steigrohr ist in Form eines Rohres ausgebildet, und die Überlaufkante des Steigrohres erzeugt eine vollumfängliche Ausbildung einer Filmströmung auf der Außenfläche des Steigrohres. Es ist ein einziges Steigrohr oder mehr als ein Steigrohr kreis- oder matrixförmig im ersten Behältermantel vorgesehen, und das Verteilerrohr ist mit einem Eintritt für einen Gesamtstrom der zu entgasenden Magermilch verbunden.

Die Entgasung der Magermilch lässt sich in beiden vorstehend definierten Vorrichtungen beschleunigen, wenn an den Kopfraum der Vorrichtung eine Vakuumquelle angeschlossen ist, die auf die zu entgasende Magermilch einwirkt.

### KURZBESCHREIBUNG DER ZEICHNUNGEN

Eine eingehendere Darstellung der mit der Erfindung erzielbaren Ergebnisse mit Blick auf die Reduzierung des Wachstums thermophiler Keime in einem rekuperativen Wärmeaustauscher einer molkereitechnischen Prozessanlage ergibt sich aus der folgenden Beschreibung und den beigefügten Figuren der Zeichnung sowie aus den Ansprüchen. Es zeigen
- **Figur 1**: in schematischer Darstellung einen Anlagenteil einer molkereitechnischen Prozessanlage, in dem die Wirksamkeit der erfindungsgemäßen Entgasung bei Magermilch untersucht wurde und
- **Figur 2**: ein Diagramm, in welchem eine Auswahl aus den in dem Anlagenteil gemäß **Figur 1** gewonnenen Messergebnissen dargestellt ist, und zwar in Form einer Abhängigkeit der logarithmisch dargestellten thermophilen Keimzahl in KbE/ml von der linear dargestellten Zeit in Stunden.

### BESCHREIBUNG DER VERSUCHSANORDNUNG UND KOMMENTIERUNG DER VERSUCHSERGEBNISSE

### Versuchsanordnung

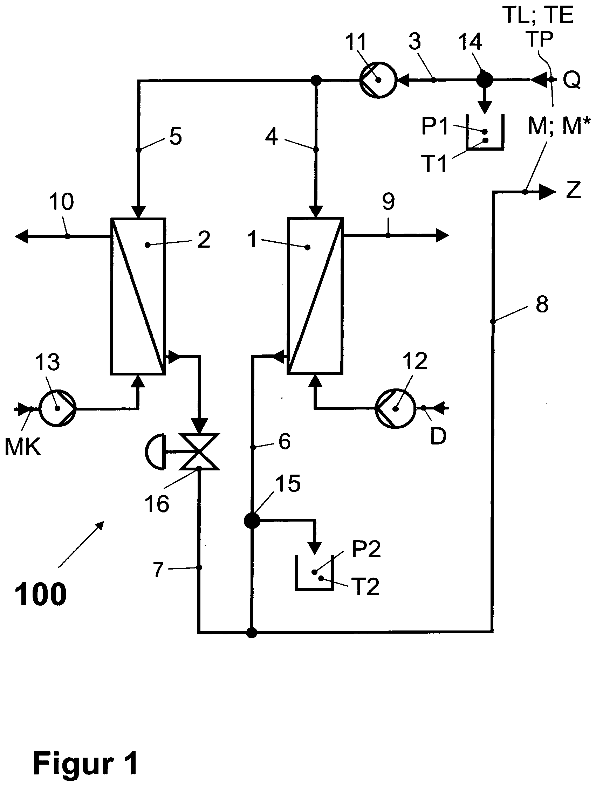

Ein Anlagenteil einer bestehenden und real produzierenden Prozessanlage 100 **(****Figur 1****)** wird über eine Vorlaufleitung 3 aus einer Quelle Q für nicht entgaste Magermilch M oder entgaste Magermilch M* gespeist. Bei dieser Quelle Q kann es sich um einen Lagertank oder Stapelbehälter, um den Austritt aus einem Wärmeaustauscher oder einem anderen Prozessaggregat (z.B. einem Separator) der Prozessanlage oder um den Austritt aus einer Entgasungsvorrichtung handeln. Entsprechend wird die Magermilch M, M* bei Herkunft aus einem Lagertank mit einer Lagerungstemperatur TL, bei Herkunft aus einem Wärmeaustauscher oder Prozessaggregat mit einer Prozesstemperatur TP oder bei Herkunft aus einer Entgasungsvorrichtung mit einer Entgasungstemperatur TE der Vorlaufleitung 3 zugeführt. Von hier aus gelangt die Magermilch M, M* über eine erste Pumpe 11 zu einer Verzweigungsstelle, wo sich die Vorlaufleitung 3 in einen ersten und einen zweiten Vorlaufleitungsabschnitt 4, 5 verzweigt. Der erste Vorlaufleitungsabschnitt 4 führt zu einem regenerativ betriebenen ersten Wärmeaustauscher 1 und der zweite Vorlaufleitungsabschnitt 5 führt zu einem regenerativ betriebenen zweiten Wärmeaustauscher 2. Der produktseitige Austritt des ersten Wärmeaustauschers 1 ist mit einem ersten Rücklaufleitungsabschnitt 6 und der produktseitige Austritt des zweiten Wärmeaustauschers 2 ist mit einem zweiten Rücklaufleitungsabschnitt 7 verbunden. Erster und zweiter Rücklaufleitungsabschnitt 6, 7 münden an einer Vereinigungsstelle in eine Rücklaufleitung 8 ein, die zu einem als Ziel Z bezeichneten Bereich der die Magermilch M, M* weiterverarbeitenden Prozessanlage führt.

Der erste Wärmeaustauscher 1 wird über eine erste Heizkreisleitung 9 und eine zweite Pumpe 12 im Gegenstrom mit einem ersten Wärmeträgermedium, beispielsweise mit Brüden D, beaufschlagt, und der zweite Wärmeaustauscher 2 wird über eine zweite Heizkreisleitung 10 und eine dritte Pumpe 13 im Gegenstrom mit einem zweiten Wärmeträgermedium, beispielsweise mit Magermilchkonzentrat MK, beaufschlagt. Da die Wärmeaustauscher 1 und 2 in der Regel auf unterschiedlichem Temperaturniveau betrieben werden, kann über ein in dem zweiten Rücklaufleitungsabschnitt 7 angeordnetes Regelventil 16 eine gewünschte Mischungstemperatur in der Rücklaufleitung 8 eingestellt werden.

In der Vorlaufleitung 3 ist, in Strömungsrichtung gesehen, vor der ersten Pumpe 11 eine erste Probenahmestelle 14 vorgesehen, an der eine erste Probe P1 mit einer ersten Probentemperatur T1 gewonnen werden kann. In dem ersten Rücklaufleitungsabschnitt 6 ist eine zweite Probenahmestelle 15 angeordnet, an der eine zweite Probe P2 mit einer zweiten Probentemperatur T2 gewonnen werden kann.

### Versuchsergebnisse

Die nachstehend dargestellten Versuchsergebnisse wurden in einer bestehenden Prozessanlage unter der dort vorherrschenden rauhen Betriebsumgebung gewonnen und nicht an einer Laboranlage. Messabweichungen, ggf. auch Messfehler und Streuung der Messwerte, sind unvermeidbar und daher hinzunehmen. Es wurden keine im Rahmen der im Folgenden dargestellten Versuche gewonnenen Messwerte unterdrückt.

Die nachstehend kommentierten Versuchsergebnisse der Versuche **1.1** und **4.2** dokumentieren den Stand der Technik mit Blick auf das Wachstum thermophiler Keime in nicht entgaster Magermilch M durch thermische Behandlung in einem regenerativen ersten Wärmeaustauscher 1. Durch Probenahme P1, P2 an der ersten und der zweiten Probenahmestelle 14, 15 wird der Gehalt an thermophilen Keimen vor und nach der thermischen Behandlung erfasst und dokumentiert. Der Versuch **4.1** zeigt, wie sich die Anwendung des erfindungsgemäßen Verfahrens auf das Wachstum thermophiler Keime in entgaster Magermilch M* auswirkt.

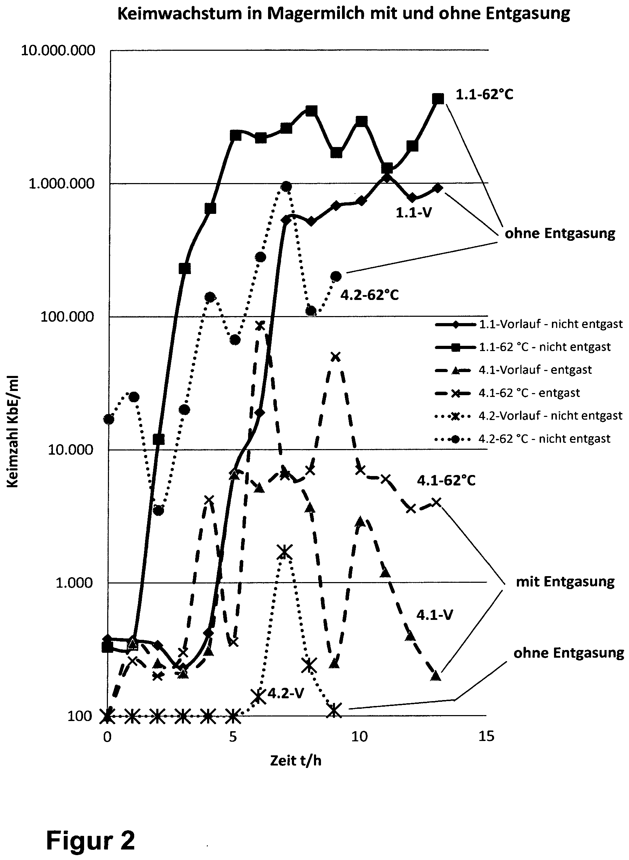

### Versuch 1.1 (Temperaturen TP = 15 °C und TL = 8 °C in der Vorlaufleitung 3) Der Versuch 1.1 (Figur 2; Kennzeichnung: des Kurvenverlaufs mit 1.1-V; in der Legende mit 1.1-Vorlauf - nicht entgast) lief über insgesamt 13 Stunden und wurde über die gesamte Versuchszeit mit nicht entgaster Magermilch M gefahren. Bis zur Zeit t = 6 h gelangt die nicht entgaste Magermilch M mit einer Prozesstemperatur TP von ca. 15 °C von einem Plattenwärmeaustauscher in die Vorlaufleitung 3. Ab der Zeit t = 6 h wird die nicht entgaste Magermilch M aus einem Tanklager mit einer Lagerungstemperatur TL von ca. 8 °C der Vorlaufleitung 3 zugeführt.

Aus dem Kurvenverlauf **1.1-V** ist die Ausgangs-Keimbelastung (Keimzahl KbE/ml) der unter den vorstehenden Bedingungen der Vorlaufleitung 3 zugeführten nicht entgasten Magermilch M zu entnehmen. Die Messwerte entstammen der jeweils ersten Probe P1 an der ersten Probenahmestelle 14 in der Vorlaufleitung 3. Die gemessenen Werte stagnieren annähernd im Bereich von t = 0 bis 4 h bei 230 (Minimum) bis 420 KbE/ml (Maximum) und steigen dann bis t = 6 h auf ca. 19.000 KbE/ml an (erster Versuchsabschnitt). Die aus dem Tanklager ab der Zeit t = 6 h bis t = 13 h mit TL = 8 °C (zweiter Versuchsabschnitt) zugeführte nicht entgaste Magermilch M ist mit 19.000 (Minimum) und 1.100.000 KbE/ml (Maximum) wesentlich stärker keimbelastet als die nicht entgaste Magermilch M des ersten Versuchsabschnittes.

Die nicht entgaste Magermilch M gemäß dem vorstehenden Kurvenverlauf **1.1-V** wird im ersten Wärmeaustauscher 1 auf eine Austrittstemperatur von ca. 62 °C erwärmt. Von dieser nicht entgasten Magermilch M wird an der zweiten Probenahmestelle 15 jeweils eine zweite Probe P2 genommen. Die zugeordneten Messwerte sind über den Kurvenverlauf **1.1-62 °C** in **Figur 2** (Kennzeichnung: in der Legende mit **1.1-62 °C** - **nicht entgast)** abgebildet.

Bis zur Zeit t = 6 h ist im Kurvenverlauf **1.1-62 °C** ein signifikanter Anstieg der thermophilen Keimzahl zu erkennen, nämlich von 330 (Minimum) bis 2.300.000 KbE/ml (Maximum für t = 5 h). Dieser Anstieg korreliert mit dem Start des Biofilms im ersten Wärmeaustauscher 1.

Ab der Zeit t = 6 h führt gemäß dem Kurvenverlauf **1.1-62 °C** die hohe Ausgangskeimzahl in der Vorlaufleitung 3 auch im ersten Wärmeaustauscher 1 zu einem deutlich höheren Anteil an thermophilen Keimen, der im gesamten Zeitraum von t = 6 h bis t = 13 h mit 1.700.000 KbE/ml (Minimum) und 4.300.000 KbE/ml (Maximum) stets über dem Anteil in der Vorlaufleitung 3 (Kurvenverlauf **1.1-V;** Maximum: 1.100.000 KbE) liegt.

### Versuch 4.2 (Temperatur TP = 15 °C in der Vorlaufleitung 3)

Der Versuch 4.2 (**Figur 2****;** Kennzeichnung: des Kurvenverlaufs mit **4.2-V;** in der Legende mit **4.2-Vorlauf - nicht entgast)** lief über insgesamt 9 Stunden und wurde über die gesamte Versuchszeit mit nicht entgaster Magermilch M gefahren. Über den gesamten Versuchszeitraum gelangt die nicht entgaste Magermilch M mit einer Prozesstemperatur TP von ca. 15 °C von einem Plattenwärmeaustauscher in die Vorlaufleitung 3.

Aus dem Kurvenverlauf **4.2-V** ist die Ausgangs-Keimbelastung (Keimzahl KbE/ml) der unter den vorstehenden Bedingungen der Vorlaufleitung 3 zugeführten nicht entgasten Magermilch M zu entnehmen. Die Messwerte entstammen der jeweils ersten Probe P1 an der ersten Probenahmestelle 14 in der Vorlaufleitung 3. Die gemessenen Werte stagnieren, mit Ausnahme eines Ausreißers bei t = 7 h mit 1.700 KbE/ml, bei 100 (Minimum) bis 240 KbE/ml (Maximum),

Die nicht entgaste Magermilch M gemäß dem vorstehenden Kurvenverlauf **4.2-V** wird im ersten Wärmeaustauscher 1 auf eine Austrittstemperatur von ca. 62 °C erwärmt. Von dieser nicht entgasten Magermilch M wird an der zweiten Probenahmestelle 15 jeweils eine zweite Probe P2 genommen. Die zugeordneten Messwerte sind über den Kurvenverlauf **4.2-62 °C** in **Figur 2** (Kennzeichnung: in der Legende mit **4.2-62 °C - nicht entgast**) abgebildet.

Bis zur Zeit t = 6 h ist im Kurvenverlauf **4.2-62 °C,** mit Ausnahme eines Ausreißers bei t = 2 h mit 3500 KbE/ml, ein signifikanter Anstieg der thermophilen Keimzahl zu erkennen, nämlich von 17.000 (Minimum) bis 280.000 KbE/ml (Maximum). Dieser Anstieg korreliert wiederum mit dem Start des Biofilms im ersten Wärmeaustauscher 1. Ab der Zeit t = 6 h verharrt der Anteil der thermophilen Keime auf hohem Niveau, nämlich zwischen 110.000 KbE/ml (Minimum) und 950.000 KbE/ml (Maximum) und liegt damit stets um zwei bis drei Zehnerpotenzen über dem Anteil in der Vorlaufleitung 3 (Kurvenverlauf **4.2-V;** Maximum: 240 KbE).

### Versuch 4.1

### (Entgasung bei TE = 55 °C; Temperatur ca. 8 bis 15 °C in der Vorlaufleitung 3)

Der Versuch 4.1 (**Figur 2****;** Kennzeichnung: des Kurvenverlaufs mit **4.1-V;** in der Legende mit **4.1-Vorlauf** - **entgast**) lief über insgesamt 13 Stunden und wurde über die gesamte Versuchszeit mit entgaster Magermilch M* gefahren. Diese entgaste Magermilch M* wurde bei ca. 55 °C sehr effektiv entgast und anschließend auf ca. 8 °C bis 15 °C gekühlt. Bis etwa zur Zeit t = 5 h (erster Versuchsabschnitt) gelangt die entgaste Magermilch M* von einem Plattenwärmeaustauscher in die Vorlaufleitung 3. Ab etwa der Zeit t = 5 h (zweiter Versuchsabschnitt) wird die entgaste Magermilch M* aus einem Tanklager der Vorlaufleitung 3 zugeführt.

Aus dem Kurvenverlauf **4.1-V** ist die Ausgangs-Keimbelastung (Keimzahl KbE/ml) der unter den vorstehenden Bedingungen der Vorlaufleitung 3 zugeführten entgasten Magermilch M* zu entnehmen. Die Messwerte entstammen der jeweils ersten Probe P1 an der ersten Probenahmestelle 14 in der Vorlaufleitung 3. Die gemessenen Werte stagnieren näherungsweise im Bereich der Zeit t = 0 bis 5 h auf sehr niedrigem Niveau bei 100 (Minimum) bis 350 KbE/ml (Maximum).

Die aus dem Tanklager ab etwa der Zeit t = 5 h bis t = 13 h zugeführte entgaste Magermilch M* ist gemäß dem Kurvenverlauf **4.1-V** im Bereich der Zeit t = 5 bis t = 11 h mit 6.800 (Maximum) und 1.200 KbE/ml (Minimum) wesentlich stärker keimbelastet als die im ersten Versuchsabschnitt des Versuchs 4.1 zugeführte entgaste Magermilch M*.

Die entgaste Magermilch M* gemäß dem vorstehenden Kurvenverlauf **4.1-V** wird im ersten Wärmeaustauscher 1 auf eine Austrittstemperatur von ca. 62 °C erwärmt. Von dieser entgasten Magermilch M* wird an der zweiten Probenahmestelle 15 jeweils eine zweite Probe P2 genommen. Die zugeordneten Messwerte sind über den Kurvenverlauf **4.1-62 °C** der **Figur 2** (Kennzeichnung: in der Legende mit **4.1-62 °C** - **entgast**) abgebildet.

Bis zur Zeit t = 5 h ist im Kurvenverlauf **4.1-62 °C** mit 100 (Minimum) bis 360 KbE/ml (Maximum) kein Anstieg der thermophilen Keimzahl zu erkennen, wenn man von einem vermutlichen Ausreißer mit 4.200 KbE/ml bei der Zeit t = 4 h absieht. Diese entgaste Magermilch M* verursacht keinen messbaren Biofilm im ersten Wärmeaustauscher 1.

Ab etwa der Zeit t = 5 h erhöht sich zwar die Keimzahl der über die Vorlaufleitung 3 zugeführten entgasten Magermilch M* auf 3.600 (Minimum) bis 7.000 KbE/ml (Maximum), wobei bei der Zeit t = 6 h und t = 9 h mit 86.000 bzw. 50.000 KbE/ml vermutlich Ausreißer gemessen wurden, jedoch liegt der Anteil thermophiler Keime in der hinreichend entgasten Magermilch M* gegenüber dem Versuch 4.2 (nicht entgaste Magermilch M) um näherungsweise zwei Zehnerpotenzen und gegenüber dem Versuch 1.1 (ebenfalls nicht entgaste Magermilch M) um näherungsweise drei Zehnerpotenzen niedriger.

Damit ist gezeigt, dass eine hinreichende Entgasung der Magermilch die thermophile Keimzahl in rekuperativen Wärmaustauschern, die in einem Temperaturbereich von ca. 50 °C bis 70 °C betrieben werden, signifikant senkt und dadurch dort zu einem geringeren Aufwachsen eines Biofilms auf den produktbeaufschlagten Flächen des Wärmeaustauschers führt. Dies wiederum hat zur Folge, dass die Standzeit des Wärmeaustauschers verlängert und somit der zeitliche Abstand notwendiger benachbarter Reinigungszyklen vergrößert wird.

### BEZUGSZEICHENLISTE DER VERWENDETEN ABKÜRZUNGEN

- 100: Anlagenteil einer Prozessanlage

- 1: erster Wärmeaustauscher
- 2: zweiter Wärmeaustauscher
- 3: Vorlaufleitung
- 4: erster Vorlaufleitungsabschnitt
- 5: zweiter Vorlaufleitungsabschnitt
- 6: erster Rücklaufleitungsabschnitt
- 7: zweiter Rücklaufleitungsabschnitt
- 8: Rücklaufleitung
- 9: erste Heizkreisleitung
- 10: zweite Heizkreisleitung
- 11: erste Pumpe
- 12: zweie Pumpe
- 13: dritte Pumpe
- 14: erste Probenahmestelle
- 15: zweite Probenahmestelle
- 16: Regelventil

- D: erstes Wärmeträgermedium (z.B. Brüden)

- M: Magermilch (nicht entgast)
- M*: Magermilch (entgast)

- MK: zweites Wärmeträgermedium (z.B. Magermilchkonzentrat MK)
- Q: Quelle (Magermilch M, M*)

- P1: erste Probe (Vorlauf, T1)
- P2: zweite Probe (T2 = 62 °C)
- T1: erste Probentemperatur (Vorlauf)
- T2: zweite Probentemperatur (T2 = 62 °C)
- TE: Entgasungstemperatur
- TL: Lagerungstemperatur
- TP: Prozesstemperatur
- Top: Temperaturoptimum (optimales Keimwachstum)

- Z: Ziel

## Patentansprüche

1. Verfahren zur Reduzierung des Wachstums thermophiler Keime in Wärmeaustauschern molkereitechnischer Prozessanlagen, bei dem nicht entgaste Magermilch (M), die keiner Hocherhitzung zur Inaktivierung thermophiler Keime unterzogen wurden, in einem Temperaturbereich unterhalb von 63 **°C** einer Entgasung unterzogen und dadurch zu einer entgasten Magermilch (M*) wird, wobei gegebenenfalls die entgaste Magermilch (M*) nach ihrer Entgasung auf eine Lagerungstemperatur (TL) abgekühlt und bei dieser gelagert wird, und wobei die entgaste Magermilch (M*) in einem weiteren Behandlungsprozess eine thermische Behandlung in einem rekuperativen Wärmeaustauscher erfährt, wobei die thermische Behandlung oberhalb von 63 °C erfolgt.

2. Verfahren nach Anspruch 1,
**dadurch gekennzeichnet,**
**dass** die thermische Behandlung der entgasten Magermilch (M*) in einem Temperaturbereich von 63 °C bis 68 °C, dem Temperaturoptimum (Top) zum optimalen Wachstum thermophiler Keime, liegt.

3. Verfahren nach Anspruch 1 oder 2,
**dadurch gekennzeichnet,**
**dass** eine Entgasungstemperatur (TE) zwischen 53 °C und 58 °C liegt und bevorzugt 55 °C beträgt.

4. Verfahren nach einem der vorhergehenden Ansprüche,
**dadurch gekennzeichnet,**
**dass** die entgaste Magermilch (M*) in ihrem Zustand nach ihrer Entgasung zeitlich unmittelbar nach der Entgasung mit einer optimalen Entgasungstemperatur dem folgenden Behandlungsprozess zugeführt wird.

5. Verfahren nach einem der vorhergehenden Ansprüche,
**dadurch gekennzeichnet,**
**dass** die Lagerungstemperatur (TL) zwischen 8 °C und 15 °C liegt.

6. Verfahren nach einem der vorhergehenden Ansprüche,
**dadurch gekennzeichnet,**
**dass** die Entgasung über eine an die jeweiligen Erfordernisse des Entgasungsprozesses anpass- und frei einstellbare Zeitdauer derart durchgeführt wird, dass in der durch die Zeitdauer bestimmte mittlere Verweilzeit der Magermilch im Entgasungsprozess allen abscheidbaren Gasbestandteilen der nicht entgasten Magermilch (M) die Gelegenheit zu ihrer Abscheidung gegeben ist.

## Claims

1. A method to reduce the growth of thermophilic germs in heat exchangers of dairy processing plants, in which non-degassed skimmed milk (M), which had not been processed at high-temperature for inactivating thermophilic germs, is degassed in a temperature range of below 63 °C and becomes a degassed skimmed milk (M*) through this, wherein as the case may be, the degassed skimmed milk (M*) is cooled down to a storage temperature (TL) after its degassing and is stored at this temperature, and wherein in an additional treatment process, the degassed skimmed milk (M*) experiences a thermal treatment in a recuperative heat exchanger, the thermal treatment taking place above 63° C.

2. The method according to claim 1, **characterised in that** the thermal treatment of the degassed skimmed milk (M*) is made in a temperature range of 63 °C to 68 °C, i.e. in the optimum temperature (Top) for the optimum growth of thermophilic germs.

3. A method according to the claims 1 or 2, **characterised in that** a degassing temperature (TE) is between 53 °C and 58 °C, and is preferably 55 °C.

4. A method according to any one of the preceding claims, **characterised in that** the degassed skimmed milk (M*) is supplied to the subsequent treatment procedure in its condition immediately after its degassing at an optimum degassing temperature.

5. A method according to any one of the preceding claims, **characterised in that** the storage temperature (TL) is between 8 °C and 15 °C.

6. A method according to any one of the preceding claims, **characterised in that** the degassing is performed during a time period adaptable and deliberately adjustable to the requirements of the degassing procedure, such that in the mean retention time of the skimmed milk in the degassing procedure defined by this time period, all the separable gaseous constituents of the not degassed skimmed milk (M) have the opportunity for their separation.

## Revendications

1. Procédé de réduction de la croissance de germes thermophiles dans des échangeurs de chaleur d'usines laitières, dans lequel du lait écrémé non dégazé (M), qui n'a pas été pasteurisé à haute température pour inactiver des germes thermophiles, est dégazé dans une plage de températures de moins que 63 °C et devient un lait écrémé dégazé (M*) par cela, pendant que le cas échéant, le lait écrémé dégazé (M*) est refroidi à une température de stockage (TL) après son dégazage et est stocké dans celle-ci, et dans lequel dans un autre procédure de traitement, le lait écrémé dégazé (M*) subit un traitement thermique dans un échangeur de chaleur à récupération, le traitement thermique étant au-dessus de 63° C.

2. Procédé selon la revendication 1, **caractérisé en ce que** le traitement thermique du lait écrémé dégazé (M*) est fait dans une plage de températures de 63 °C à 68 °C, i.e. dans la température optimale (Top) pour la croissance optimale de germes thermophiles.

3. Procédé selon la revendication 1 ou 2, **caractérisé en ce que** une température (TE) de dégazage est entre 53 °C et 58 °C, et est préférablement 55 °C.

4. Procédé selon l'une quelconque des revendications précédentes, **caractérisé en ce que** le lait écrémé dégazé (M*) est fourni au procès de traitement subséquent dans son condition immédiatement après le dégazage avec une température de dégazage optimale.

5. Procédé selon l'une quelconque des revendications précédentes, **caractérisé en ce que** la température de stockage (TL) est entre 8 °C et 15 °C.

6. Procédé selon l'une quelconque des revendications précédentes, **caractérisé en ce que** le dégazage est fait pendant une durée adaptable et arbitrairement ajustable aux besoins du procès de dégazage, de telle façon que le temps de séjour moyen du lait écrémé dans le procès de dégazage défini par ladite durée permet à tous les composants gazeuses du lait écrémé dégazé (M) d'être séparés.
